# EUROPEAN PATENT APPLICATION

(11) **EP 4 807 324 A1**
(43) Date of publication of application: **16.09.2026**
(21) Application number: 24921257.2
(22) Date of filing: 30.05.2024
(51) Int. Cl.: G01C 21/20, B65G 54/02, B65G 43/10, G06Q 10/047

(54) **MOVER PATH OPTIMIZATION METHOD AND APPARATUS, AND ELECTRONIC DEVICE AND STORAGE MEDIUM**

(30) Priority: 31.01.2024 CN 202410138438
(71) Applicant: Suzhou Zongwei Technology Co., Ltd, Suzhou, Jiangsu 215101 (CN)
(72) Inventor: YE, Jinyu, Suzhou, Jiangsu 215101 (CN); SHEN, Jianeng, Suzhou, Jiangsu 215101 (CN); LU, Hongxing, Suzhou, Jiangsu 215101 (CN)
(74) Representative: Manitz Finsterwald Patent- und Rechtsanwaltspartnerschaft mbB
(86) International application number: PCT/CN2024/096283
(87) International publication number: WO 2025/161216

(57) **Abstract**

In embodiments of the present disclosure, a mover path optimization method and apparatus, an electronic device, and a storage medium are provided, which belong to the field of path planning. The method includes: acquiring present three-dimensional map data of a target mover, where the present three-dimensional map includes map node objects, and the map node objects include a start node object, a destination node object, and candidate node objects; adding the candidate node objects to a predetermined priority queue based on the present three-dimensional map data, the start node object, and the destination node object to obtain a present priority queue and performing path backtracking to obtain a present optimized path; acquiring three-dimensional map data of the target mover traveling along the present optimized path to a next map node object to obtain next three-dimensional map data; performing node object adjustment on the present priority queue based on the next three-dimensional map data to obtain an updated priority queue; and performing path backtracking on the updated priority queue to obtain an updated optimized path.

## Description

### CROSS-REFERENCE TO RELATED APPLICATIONS

The present application claims priority to Chinese patent application No. 202410138438X, filed on January 31, 2024, and entitled "MOVER PATH OPTIMIZATION METHOD AND APPARATUS, AND ELECTRONIC DEVICE AND STORAGE MEDIUM", the entire content of which is incorporated herein by reference.

### TECHNICAL FIELD

The present disclosure relates to the field of path planning, and in particular, to a mover path optimization method and a mover path optimization apparatus, and an electronic device and a storage medium.

### BACKGROUND

A magnetic-driven conveyor line is a conveying system based on magnetic levitation. In the magnetic-driven conveyor line, workpieces are placed on movers to be transported. However, the movers need to travel along predetermined paths during transportation. To avoid collisions between the movers during the transportation, it is necessary to wait for the preceding mover to complete its transportation before driving the next one, which fail to flexibly utilize the paths during the transportation, resulting in low transportation efficiency. Therefore, how to improve the efficiency and flexibility of transportation has become an urgent problem to be solved.

### SUMMARY

The main objective of embodiments of the present disclosure is to provide a mover path optimization method and apparatus, an electronic device, and a storage medium, aiming to improve the efficiency and flexibility of mover transportation.

To achieve the above objective, a mover path optimization method is provided in a first aspect of the embodiments of the present disclosure, including:
acquiring three-dimensional map data of a target mover at a present time point to obtain present three-dimensional map data, where the present three-dimensional map data are determined based on map data at the present time point and motion data of movers traveling on a map, and include map node objects, and the map node objects include a start node object, a destination node object, and a plurality of candidate node objects of the target mover;
adding the candidate node objects to a predetermined priority queue based on the present three-dimensional map data, the start node object, and the destination node object to obtain a present priority queue;
performing path backtracking on the present priority queue to obtain a present optimized path;
acquiring three-dimensional map data of the target mover traveling along the present optimized path to a next map node object to obtain next three-dimensional map data, where the next three-dimensional map data are determined based on map data at a next time point and motion data of movers traveling on the map;
performing node object adjustment on the present priority queue based on the next three-dimensional map data to obtain an updated priority queue; and
performing path backtracking on the updated priority queue to obtain an updated optimized path.

In some embodiments, the present three-dimensional map data includes motion data of the target mover and motion data of non-target movers. Adding the candidate node objects to the predetermined priority queue based on the present three-dimensional map data, the start node object, and the destination node object to obtain the present priority queue includes:
screening the map node objects based on the candidate node objects adjacent to the start node object to obtain selected node objects;
determining path segment loss data between the start node object and the selected node objects based on the start node object, the selected node objects, the motion data of the target mover, and the motion data of the non-target movers; and
adding the selected node objects to the predetermined priority queue based on the path segment loss data and the destination node object to obtain the present priority queue.

In some embodiments, before performing path backtracking on the present priority queue to obtain the present optimized path, the method further includes:
searching for the map node objects in the present priority queue to obtain a queue search result, where the queue search result indicates whether the priority queue contains any map node object; and
outputting path search failure information on a condition that the queue search result indicates that the priority queue does not contain any map node object.

In some embodiments, determining the path segment loss data between the start node object and the selected node objects based on the start node object, the selected node objects, the motion data of the target mover, and the motion data of the non-target movers includes:
acquiring a travel path segment between the selected node objects and the start node object to obtain a selected path segment;
screening the motion data of the non-target movers based on the non-target movers traveling on the selected path segment to obtain selected motion data of the non-target movers;
acquiring a length of the travel path segment of the selected path segment to obtain a selected length;
acquiring a path segment curvature of the selected path segment to obtain a selected curvature;
acquiring a station planning distance, a maximum planning speed, and a mover planning speed between the selected node objects and the start node object; and
determining the path segment loss data based on predetermined loss weight data, the selected length, the selected motion data of the non-target movers, the motion data of the target mover, the selected curvature, the station planning distance, the maximum planning speed, and the mover planning speed.

In some embodiments, the loss weight data includes a collision time loss weight, a collision distance loss weight, a longitudinal jerk loss weight, an acceleration loss weight, a curvature weight, a position difference loss weight, and a speed loss weight; the selected motion data of the non-target movers includes selected motion speeds of the non-target movers; and the motion data of the target mover includes a motion speed of the target mover, a longitudinal jerk, and an acceleration. Determining the path segment loss data based on predetermined loss weight data, the selected length, the selected motion data of the non-target movers, the motion data of the target mover, the selected curvature, the station planning distance, the maximum planning speed, and the mover planning speed includes:
determining a collision distance based on the selected length, the motion speeds of the non-target movers, and the motion speed of the target mover;
determining a collision time based on the collision distance, the motion speeds of the non-target movers, and the motion speed of the target mover;
determining safety loss data based on the collision time, the collision distance, the collision time loss weight, and the collision distance loss weight;
determining stability loss data based on the longitudinal jerk, the longitudinal jerk loss weight, the acceleration, the acceleration loss weight, the motion speed of the target mover, the selected curvature, and the curvature weight;
determining efficiency loss data based on the position difference loss weight, the station planning distance, the maximum planning speed, and the mover planning speed; and
determining the path segment loss data based on the safety loss data, the stability loss data, and the efficiency loss data.

In some embodiments, adding the selected node objects to the predetermined priority queue based on the path segment loss data and the destination node object to obtain the present priority queue includes:
sorting the selected node objects in ascending order based on the path segment loss data of the selected node objects to obtain an ascending sequence of node objects; and
adding the selected node objects to the priority queue based on the ascending sequence of node objects and the destination node object to obtain the present priority queue.

In some embodiments, before acquiring the three-dimensional map data of the target mover at the present time point to obtain the present three-dimensional map data, the method further includes:
acquiring line position information and obstacle marking information of each conveyor line at different time points, where the obstacle marking information represents obstacles on the conveyor line that affect travel of the target mover; and
constructing a map based on the line position information and the obstacle marking information to obtain the three-dimensional map data at different time points.

To achieve the above objective, a mover path optimization apparatus is provided in a second aspect of the embodiments of the present disclosure, including:
a first acquisition module configured to acquire three-dimensional map data of a target mover at a present time point to obtain present three-dimensional map data, where the present three-dimensional map data are determined based on map data at the present time point and motion data of movers traveling on a map, and include map node objects, and the map node objects include a start node object, a destination node object, and a plurality of candidate node objects of the target mover;
an addition module configured to add the candidate node objects to a predetermined priority queue based on the present three-dimensional map data, the start node object, and the destination node object to obtain a present priority queue;
a first backtracking module configured to perform path backtracking on the present priority queue to obtain a present optimized path;
a second acquisition module configured to acquire three-dimensional map data of the target mover traveling along the present optimized path to a next map node object to obtain next three-dimensional map data, where the next three-dimensional map data are determined based on map data at a next time point and motion data of movers traveling on the map;
an adjustment module configured to perform node object adjustment on the present priority queue based on the next three-dimensional map data to obtain an updated priority queue; and
a second backtracking module configured to perform path backtracking on the updated priority queue to obtain an updated optimized path.

To achieve the above objective, an electronic device is provided in a third aspect of the embodiments of the present disclosure, including a memory and a processor. The memory stores a computer program. The processor, when executing the computer program, implements the method according to the first aspect.

To achieve the above objective, a fourth aspect of the embodiments of the present disclosure provides a computer-readable storage medium storing a computer program. When the computer program is executed by a processor, the method according to the first aspect is implemented.

According to a mover path optimization method and apparatus, an electronic device, and a storage medium provided by the present disclosure, three-dimensional map data of a target mover at a present time point are acquired. The present three-dimensional map data includes map node objects, and the map node objects include a start node object, a destination node object, and a plurality of candidate node objects of the target mover. Then the candidate node objects are added to a predetermined priority queue based on the present three-dimensional map data, the start node object, and the destination node object to obtain a present priority queue. Then path backtracking is performed based on the present priority queue to obtain a present optimized path, real-time path conditions can be assessed using present map data of the target mover, selection is performed on the candidate node objects between the start node object and the destination node object, and the optimized path is obtained by using the priority queue, which improves the flexibility and efficiency of the target mover during operation of the conveyor line. Next three-dimensional map data of the target mover traveling along the optimized path to a next map node object are acquired. Node object adjustment is performed on the present priority queue based on the next three-dimensional map data to obtain an updated priority queue. Then path backtracking is performed based on the updated priority queue to obtain an updated optimized path. The method can make judgments based on the real-time path conditions at different time points and motion data of a plurality of movers in the map, select a path more advantageous for the transportation process of the target mover, and adjust the path in real time, thereby reducing the loss of the target mover on the conveyor line and improving the efficiency and flexibility of the transportation of the target mover on the conveyor line.

### BRIEF DESCRIPTION OF THE DRAWINGS

To describe the technical solutions in the embodiments of the present disclosure or in the conventional technology more clearly, the following briefly introduces the accompanying drawings required for describing the embodiments or the conventional technology. Apparently, the accompanying drawings in the following description show only some embodiments of the present disclosure, and a person skilled in the art may still derive other drawings from these accompanying drawings without creative efforts.
FIG. 1 is a flow diagram illustrating a mover path optimization method provided in an embodiment of the present disclosure.
FIG. 2 is a flow diagram illustrating another mover path optimization method provided in an embodiment of the present disclosure.
FIG. 3 is a flow diagram of step S102 in FIG. 1.
FIG. 4 is a flow diagram of step S302 in FIG. 3.
FIG. 5 is a flow diagram of step S406 in FIG. 4.
FIG. 6 is a flow diagram of step S303 in FIG. 3.
FIG. 7 is a flow diagram illustrating another mover path optimization method provided in an embodiment of the present disclosure.
FIG. 8 is a schematic diagram illustrating a structure of a mover path optimization apparatus provided in an embodiment of the present disclosure.
FIG. 9 is a schematic diagram illustrating a hardware structure of an electronic device provided in an embodiment of the present disclosure.
FIG. 10 is schematic diagram illustrating a travel route of a mover path optimization method provided in an embodiment of the present disclosure.

### DETAILED DESCRIPTION OF THE EMBODIMENTS

To make the objectives, technical solutions, and advantages of the present disclosure more clearly understood, the present disclosure is further described in detail below with reference to the accompanying drawings and embodiments. It should be understood that the specific embodiments described herein are merely used to explain the present disclosure and are not intended to limit the present disclosure.

It should be noted that, although functional module division is performed in the apparatus diagrams and logical sequences are shown in the flow diagrams, in some cases, the steps shown or described may be performed in sequences different from those of the module division in the apparatus diagrams or the sequences in the flow diagrams. The terms "first", "second", etc., in the specification, claims and the above accompanying drawings of the present disclosure are used to distinguish similar objects and not necessarily to describe a specific order or sequence.

Unless otherwise defined, in the present disclosure, all technical and scientific terms used herein have the same meaning as commonly understood by those skilled in the art. The terms used herein are merely for describing the embodiments of the present disclosure and are not intended to limit the present disclosure.

The following clearly and completely describes the technical solutions in the embodiments of the present disclosure with reference to the accompanying drawings in the embodiments of the present disclosure. Apparently, the described embodiments are merely some embodiments of the present disclosure, rather than all of the embodiments. Based on the embodiments in the present disclosure, all other embodiments obtained by those skilled in the art without creative efforts shall fall within the protection scope of the present disclosure.

First, several terms involved in the present disclosure are explained.

Priority queue refers to a data structure in which each element is associated with a priority or weight. Elements are processed based on their priorities rather than insertion order. It belongs to the field of data structures and algorithms in computer science. It can be used to quickly access and process elements with the highest priority in a data set, and commonly used in scenarios such as task scheduling, graph algorithms, and simulation systems. In an operating system, a priority queue can be used to manage process scheduling priorities to ensure that high-priority tasks are preferentially executed.

Curvature refers to a physical quantity describing a bending degree of a curve at a certain point. It belongs to the fields of mathematics and physics. It can be used to describe the bending degree of a curve or a curved surface in space, and widely used in geometry, calculus, astronomy and other fields. In engineering design, curvature is also commonly used to improve curve design to meet specific requirements, such as ensuring smooth turns in road design.

A magnetic-driven conveyor line refers to a conveying system based on magnetic levitation. In the magnetic-driven conveyor line, workpieces are placed on movers to complete workpiece transportation via the movers. However, the movers need to travel along predetermined paths during transportation. To avoid collisions between the movers during the transportation, it is necessary to wait for the preceding mover to complete its transportation before driving the next one, which fail to flexibly utilize the paths during the transportation, resulting in low transportation efficiency. Therefore, how to improve the efficiency and flexibility of transportation has become an urgent problem to be solved.

Based on this, a mover path optimization method and apparatus, an electronic device, and a storage medium are provided in the embodiments of the present disclosure to improve the efficiency and flexibility of mover transportation.

The mover path optimization method and apparatus, the electronic device, and the storage medium provided by the embodiments of the present disclosure are specifically described through the following embodiments, and the mover path optimization method in the embodiments of the present disclosure is first described.

Basic artificial intelligence technologies generally include sensors, dedicated artificial intelligence chips, cloud computing, distributed storage, big data processing technology, operation/interaction systems, mechatronics technology, etc. Artificial intelligence software technologies mainly include computer vision technology, robot technology, biometric technology, voice processing technology, natural language processing technology, machine learning/deep learning, etc.

The mover path optimization method provided by the embodiments of the present disclosure relates to the field of path planning. The mover path optimization method provided by the embodiments of the present disclosure can be applied to a terminal, a server, or software running on the terminal or the server. In some embodiments, the terminal can be a smart phone, a tablet computer, a laptop computer, a desktop computer or the like. The server can be configured as an independent physical server, a server cluster or distributed system composed of a plurality of physical servers, or a cloud server providing basic cloud computing services such as cloud service, cloud database, cloud computing, cloud function, cloud storage, network service, cloud communication, middleware service, domain name service, security service, Content Delivery Network (CDN), big data and artificial intelligence platform. The software can be an application implementing the mover path optimization method, but is not limited to the above forms.

The present disclosure can be applied to many general-purpose or special-purpose computer system environments or configurations. For example, personal computers, server computers, handheld or portable devices, tablet devices, multiprocessor systems, microprocessor-based systems, set-top boxes, programmable consumer electronic devices, network PCs, minicomputers, mainframe computers, distributed computing environments including any of the above systems or devices, etc. The technical solution of the present application may be understood in the general context of computer-executable instructions (e.g., program modules) being executed by a computer. Generally, program modules include routines, programs, objects, components, data structures, etc., that perform particular tasks or implement particular abstract data types. The present disclosure may also be applied in distributed computing environments where tasks are performed by remote processing devices that are linked through a communications network. In a distributed computing environment, program modules may be located in both local and remote computer storage media including memory storage devices.

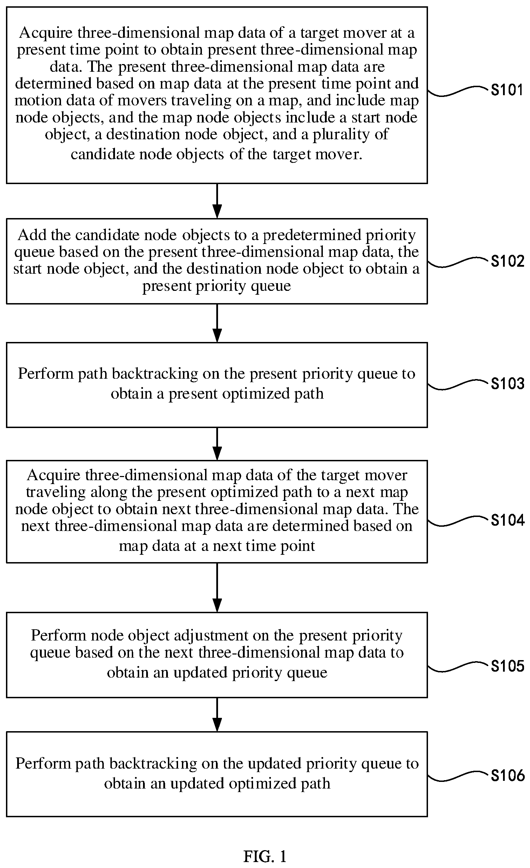

FIG. 1 is an optional flow diagram illustrating a mover path optimization method provided in an embodiment of the present disclosure. The method in FIG. 1 may include but is not limited to steps S101 to S106.

In step S101, three-dimensional map data of a target mover at a present time point are acquired to obtain present three-dimensional map data. The present three-dimensional map data are determined based on map data at the present time point and motion data of movers traveling on a map, and include map node objects, and the map node objects include a start node object, a destination node object, and a plurality of candidate node objects of the target mover.

In step S102, the candidate node objects are added to a predetermined priority queue based on the present three-dimensional map data, the start node object, and the destination node object to obtain a present priority queue.

In step S103, path backtracking is performed on the present priority queue to obtain a present optimized path.

In step S104, three-dimensional map data of the target mover traveling along the present optimized path to a next map node object are acquired to obtain next three-dimensional map data. The next three-dimensional map data are determined based on map data at a next time point and motion data of movers traveling on the map.

In step S105, node objects of the present priority queue are adjusted based on the next three-dimensional map data to obtain an updated priority queue.

In step S106, path backtracking is performed on the updated priority queue to obtain an updated optimized path.

According to steps S101 to S106 of the embodiment of the present disclosure, three-dimensional map data of a target mover at a present time point are acquired. The present three-dimensional map data includes map node objects. The map node objects include a start node object, a destination node object, and a plurality of candidate node objects of the target mover. Then, the candidate node objects are added to a predetermined priority queue based on the present three-dimensional map data, the start node object, and the destination node object to obtain a present priority queue. Then path backtracking is performed based on the present priority queue to obtain a present optimized path, real-time path conditions can be assessed using present map data of the target mover, selection is performed on the candidate node objects between the start node object and the destination node object, and the optimized path is obtained by using the priority queue, which improves the flexibility and efficiency of the target mover during operation of the conveyor line. Next three-dimensional map data of the target mover traveling along the optimized path to a next map node object are acquired. Node object adjustment is performed on the present priority queue based on the next three-dimensional map data to obtain an updated priority queue. Then path backtracking is performed based on the updated priority queue to obtain an updated optimized path. The method can make judgments based on the real-time path conditions at different time points and motion data of a plurality of movers in the map, select a path more advantageous for the transportation process of the target mover, and adjust the path in real time, thereby reducing the loss of the target mover on the conveyor line and improving the efficiency and flexibility of the transportation of the target mover on the conveyor line.

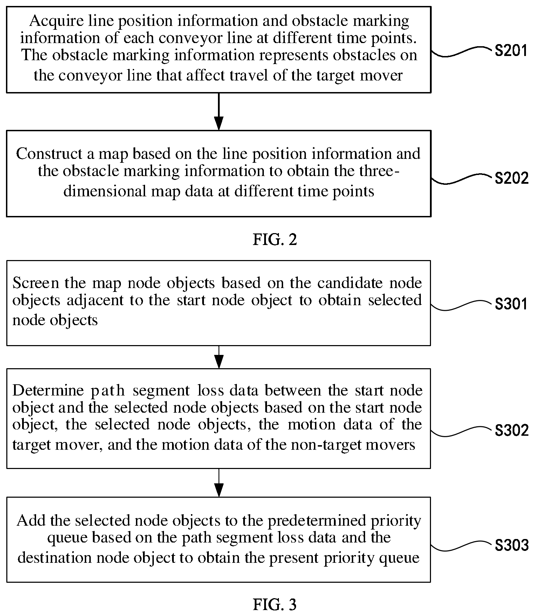

Referring to FIG. 2, before step S101 in some embodiments, the mover path optimization method may include but is not limited to steps S201 to S202.

In step S201, line position information and obstacle marking information of each conveyor line at different time points are acquired. The obstacle marking information represents obstacles on the conveyor line that affect travel of the target mover.

In step S201, a map is constructed based on the line position information and the obstacle marking information to obtain the three-dimensional map data at different time points.

In step S201 of some embodiments, the conveyor line includes many processing stations. The line position information is coordinate position information of these processing stations, represented by two-dimensional coordinates. Specifically, the line position information is represented by two-dimensional coordinate values (x, y), where x refers to the abscissa information of the processing station, and y refers to the ordinate information of the processing station. The obstacle marking information indicates whether the processing station is passable. When the processing station is passable, the target mover can pass through the processing station. When the processing station is impassable, the target mover cannot pass through the processing station, i.e., the target mover will be blocked and stopped when traveling to the processing station. Specifically, the obstacle marking information is represented by a Boolean value. When the obstacle marking information is "True", the processing station acts as an obstacle and the target mover cannot pass through. When the obstacle marking information is "False", it indicates that the obstacle is not an obstacle and the target mover can pass through the processing station.

In step S202 of some embodiments, the three-dimensional map data at different time points are map data and mover motion data at different time points. The three dimensions of the three-dimensional map data are a time dimension, an abscissa dimension, and an ordinate dimension. The three-dimensional map data includes node information, path segment information, and mover motion data. When there is a one-way path between adjacent nodes, i.e., when there is a path segment between adjacent nodes for the target mover to travel, there is path segment information between the two nodes. When a mover travels on the one-way path, the path segment information further includes motion data of the mover.

In an embodiment, the node information includes: node coordinate information, information about whether it is an obstacle, and parent node information, where the parent node information indicates a previous node of the node in the path, and is used for path backtracking to find an optimal path from a start point to a destination. By recording the parent node of each node, after the destination is found, reverse traversal is performed based on the parent nodes to obtain a complete path. The path segment information includes: a maximum allowable speed of the path segment, an acceleration, a number of cars, a safety distance, a length, and a type. The maximum allowable speed of the path segment indicates a maximum speed that the mover can reach on the path segment. The acceleration indicates an acceleration limit of the mover on the path segment. The number of cars indicates a present number of cars on the path segment. The safety distance indicates a minimum adjacent distance between two adjacent movers. The length indicates a physical distance of the path segment. The type indicates a type of the path segment, which can be a straight line, an arc, or a combination of a straight line and an arc. The type information of the path segment helps to describe the shape and attribute of the path segment more accurately. Since the speed loss of the mover traveling on an arc is greater than that traveling on a straight line, the priority of a straight path segment is higher than that of an arc path segment. The mover motion data includes: a longitudinal jerk of the target mover, an acceleration of the target mover, a speed of the target mover, a position of the target mover, an acceleration time of the target mover, a longitudinal jerk of a preceding mover, an acceleration of the preceding mover, a speed of the preceding mover, a position of the preceding mover, and an acceleration time of the preceding mover.

According to steps S201 to S202 of the embodiment of the present disclosure, a map is constructed by acquiring line position information and obstacle marking information on the conveyor line at different time points to obtain three-dimensional map data at different time points, providing a data basis for subsequent path optimization of the target mover based on path condition information at different time points, so that the target mover can perform path optimization based on real-time path conditions.

In step S101 of some embodiments, the map node objects are different stations on the conveyor line, and the map node objects include position information, path segment information, and mover motion information. The map node objects can be divided into a start node object, a destination node object, and candidate node objects, where the start node object refers to a start point for path planning of the target mover, the destination node object refers to a destination for path planning of the target mover, and the candidate node objects refer to nodes that may be traveled between the start node object and the destination node object.

Referring to FIG. 3, in step S102 in some embodiments, the mover path optimization method may include but is not limited to steps S301 to S303.

In step S301, the map node objects are screened based on the candidate node objects adjacent to the start node object to obtain selected node objects.

In step S302, path segment loss data between the start node object and the selected node objects are determined based on the start node object, the selected node objects, the motion data of the target mover, and the motion data of the non-target movers.

In step S303, the selected node objects are added to the predetermined priority queue based on the path segment loss data and the destination node object to obtain the present priority queue.

In step S301 of some embodiments, the selected node objects are map node objects adjacent to the start node object. Candidate node objects adjacent to the start node object are selected from the map node objects, and those map node objects that have a one-way path from the start node object to the adjacent candidate node objects are taken as the selected node objects.

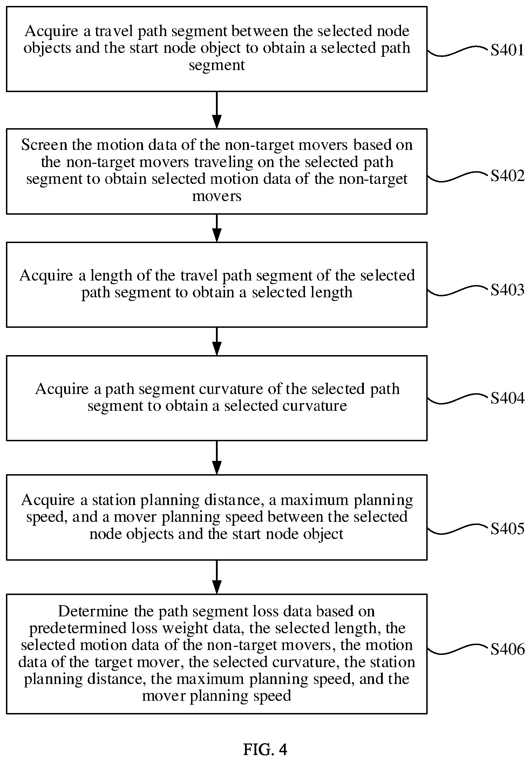

Referring to FIG. 4, in step S302 in some embodiments, the mover path optimization method may include but is not limited to steps S401 to S406.

In step S401, a travel path segment between the selected node objects and the start node object are acquired to obtain a selected path segment.

In step S402, the motion data of the non-target movers are screened based on the non-target movers traveling on the selected path segment to obtain selected motion data of the non-target movers.

In step S403, a length of the travel path segment of the selected path segment is acquired to obtain a selected length.

In step S404, a path segment curvature of the selected path segment is acquired to obtain a selected curvature.

In step S405, a station planning distance, a maximum planning speed, and a mover planning speed between the selected node objects and the start node object are acquired.

In step S406, the path segment loss data are determined based on predetermined loss weight data, the selected length, the selected motion data of the non-target movers, the motion data of the target mover, the selected curvature, the station planning distance, the maximum planning speed, and the mover planning speed.

In step S401 of some embodiments, a one-way path between the start node object and the selected node objects is used as the selected path segment.

In step S402 of some embodiments, during the path optimization of the target mover, there may be other movers traveling on the selected path segment, and motion data of the other movers is acquired to obtain the selected motion data of the non-target movers.

In step S404 of some embodiments, the curvature is road curvature. When the selected path segment has an arc path, the curvature of the arc is calculated as the selected curvature. When there is no arc path, the curvature is zero.

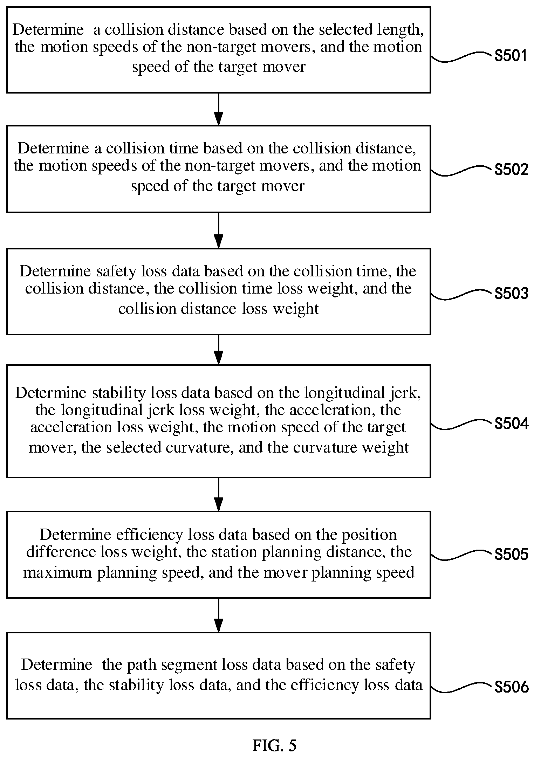

Referring to FIG. 5, in step S406 in some embodiments, the mover path optimization method may include but is not limited to steps S501 to S506.

In step S501, a collision distance is determined based on the selected length, the motion speeds of the non-target movers, and the motion speed of the target mover.

In step S502, a collision time is determined based on the collision distance, the motion speeds of the non-target movers, and the motion speed of the target mover.

In step S503, safety loss data are determined based on the collision time, the collision distance, the collision time loss weight, and the collision distance loss weight.

In step S504, stability loss data are determined based on the longitudinal jerk, the longitudinal jerk loss weight, the acceleration, the acceleration loss weight, the motion speed of the target mover, the selected curvature, and the curvature weight.

In step S505, efficiency loss data are determined based on the position difference loss weight, the station planning distance, the maximum planning speed, and the mover planning speed.

In step S506, the path segment loss data are determined based on the safety loss data, the stability loss data, and the efficiency loss data.

In step S501 of some embodiments, the collision distance is a distance traveled by the target mover by decelerating to avoid collision with a preceding mover on the path segment when the target mover travels from one map node object to the next map node object along the path segment and collides with the preceding mover on the path segment. When the target mover travels from one map node object to the next map node object along the path segment and collides with the preceding mover on the path segment, the target mover decelerates until maintaining a safety distance from the preceding mover and a consistent speed with the preceding mover, and the distance traveled by the deceleration is the collision distance.

In step S502 of some embodiments, the collision time is a time taken by the target mover to decelerate to avoid collision with a preceding mover on the path segment. When the target mover travels from one map node object to the next map node object along the path segment and collides with the preceding mover on the path segment, the target mover decelerates until maintaining a safety distance from the preceding mover and a consistent speed with the preceding mover, and the time taken by the deceleration is the collision time.

In step S503 of some embodiments, the safety loss is loss data considered when there is an obstacle in front of the target mover, and is used to balance the safety loss of the mover and avoid a situation where the following distance is too close. In some embodiments, a calculation formula of the safety loss data is as shown in formula (1): ${C}_{1} = \frac{{w}_{tcc}}{{t}_{col} - {t}_{0}} + \frac{{w}_{d}}{{S}_{col} - {S}_{0}}$ where C₁ refers to the safety loss data, t_{col} is the collision time, t₀ refers to a starting moment of uniform motion before braking of the target mover, S_{col} refers to the collision distance, S₀ refers to a starting position of the target mover, w_{tcc} refers to the collision time loss weight, and w_{d} refers to the collision distance loss weight.

In step S504 of some embodiments, the stability loss data is data considered for smooth travel of the target mover on the selected path segment, and is used to ensure stable travel of the target mover. The longitudinal jerk, acceleration, and road curvature of the target mover need to be considered, and a smaller speed of the target mover is expected when the curvature is large. In some embodiments, a calculation formula of the stability loss data is as shown in formula (2): ${C}_{2} = {w}_{j} \times {jerk}^{2} + {w}_{a} \times a + {w}_{k} \times k \times {v}^{2}$ where C₂ refers to the stability loss data, wⱼ refers to the longitudinal jerk loss weight, jerk² refers to the longitudinal jerk, wₐ refers to the acceleration loss weight, a refers to the acceleration, wₖ refers to the curvature loss weight, k refers to the selected curvature, and v² refers to the motion speed of the target mover.

In step S505 of some embodiments, the efficiency loss data are data considered for ensuring that the speed of the target mover on the selected path segment does not exceed a speed set for the selected road. The station planning distance is a physical distance from a station of the start node object to a station of the selected node object of the target mover. The maximum planning speed is a maximum speed acceptable on the selected path segment. The mover planning speed is a maximum speed that the target mover can reach after loading a workpiece, and different workpieces have different mover planning speeds. In some embodiments, a calculation formula of the efficiency loss data is as shown in formula (3): ${C}_{3} = {w}_{s} \left({S}_{max}-{S}_{0}\right) + {w}_{v} \left({v}_{max}-{v}_{0}\right)$ where C₃ refers to the efficiency loss data, wₛ refers to the position difference loss weight, Sₘₐₓ refers to an end point of the station planning distance, S₀ refers to a present position of the target mover, vₘₐₓ refers to the maximum planning speed, v₀ refers to the mover planning speed, and wᵥ refers to the speed difference loss weight.

In step S506 of some embodiments, a calculation method of the path segment loss data is as shown in formula (4): $P = A \times {C}_{1} + B \times {C}_{2} + D \times {C}_{3}$ where P refers to the path segment loss data, C₁ refers to the safety loss data, C₂ refers to the stability loss data, C₃ refers to the efficiency loss data, and A, B, and C are constants respectively.

According to steps S501 to S506 of the embodiment of the present disclosure, by comprehensively calculating the path segment loss data based on the path segment information, the mover motion information, and the map node objects, the target mover can perform judgment based on the path segment loss data when selecting path optimization to select an optimal candidate node object.

According to steps S401 to S406 of the embodiment of the present disclosure, the path segment loss data are determined by acquiring the target mover motion data, the non-target mover motion data, the selected length of the selected path segment, the selected curvature, the station planning distance, the maximum planning speed, and the mover planning speed, and by comprehensively considering real-time path conditions, thereby enabling the target mover to judge the present real-time path conditions to select an optimal candidate node object, improving the efficiency and flexibility of the target mover.

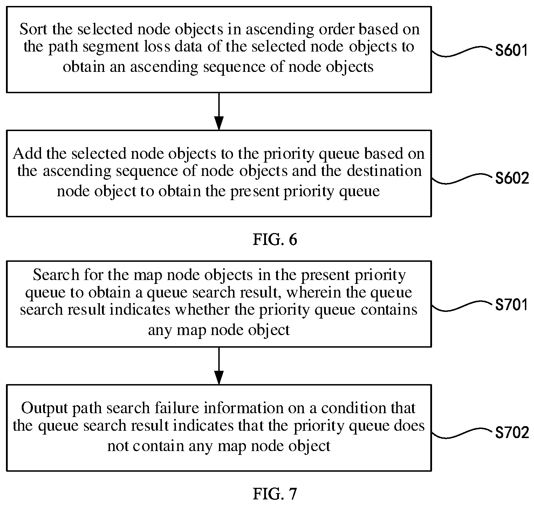

Referring to FIG. 6, in step S303 of some embodiments, the mover path optimization method may include but is not limited to steps S601 to S602:
In step S601, the selected node objects are sorted in ascending order based on the path segment loss data of the selected node objects to obtain an ascending sequence of node objects.
In step S602, the selected node objects are added to the priority queue based on the ascending sequence of node objects and the destination node object to obtain the present priority queue.
In step S602 of some embodiments, the selected node objects are added to the priority queue in the order of the ascending sequence of node objects, and the nodes of the priority queue are placed in the order of the path segment loss data from small to large.

According to steps S601 to S602 of the embodiment of the present disclosure, the selected node objects are added to the priority queue in the order from small to large to obtain the present priority queue, so that when the target mover acquires a next map node object, selection can be performed based on the path segment loss data, and a map node object with small path segment loss data is preferentially selected, thereby reducing consumption required for travel of the target mover and improving the efficiency of the target mover.

In step S103 of some embodiments, the present priority queue includes map node objects and a destination node object. The map node objects and the destination node object are obtained by continuously selecting candidate map node objects based on the path segment loss data, starting from the start point. Parent node information in the map node objects and the destination node object records a previous map node object where the target mover is located. Path backtracking is performed as follows: performing reverse traversal based on parent node information of a parent node of the destination to obtain a previous map node object where the target mover is located, i.e., a first reverse map node object, then acquiring a second reverse map node object based on parent node information of the first reverse map object, and repeating this process cyclically to obtain a reverse path from the destination to the start point. Finally, reverse processing is performed on the reverse path to obtain a forward path, i.e., to obtain the present optimized queue.

In an embodiment, the present priority path has the following nodes: a start node object with null parent node information, a first map node object with parent node information being the start node object, a second map node object with parent node information being the first map node object, and a destination node object with parent node information being the second map node object. Path backtracking is performed based on the objects in the priority queue. First, parent node information of the destination node object is acquired to obtain the second map node object, then parent node information of the second map node object is acquired to obtain the first map node object, and then parent node information of the first map node object is acquired to obtain the start node object, i.e., a reverse path exists as: destination node object, second map node object, first map node object, start node object. The reverse path is reversed to obtain a forward path: start node object, first map node object, second map node object, destination node object.

Referring to FIG. 7, after step S103 in some embodiments, the mover path optimization method may include but is not limited to steps S701 to S702.

In step S701, the map node objects in the present priority queue are searched to obtain a queue search result. The queue search result indicates whether the priority queue contains any map node object.

In step S702, path search failure information is output on a condition that the queue search result indicates that the priority queue does not contain any map node object.

In step S701 of some embodiments, a search is performed to determine whether a map node object exists among the nodes in the present priority queue. If a map node object exists in the present optimized path, it indicates that the target mover can travel from the start node object to the destination node object under the present three-dimensional map data.

In step S702 of some embodiments, when the queue search result indicates that the priority queue does not contain any map node object, path search failure information is output. In some embodiments, the path search failure information includes target mover information, a start node object, a destination node object, and present three-dimensional map data.

According to steps S701 to S702 of the embodiment of the present disclosure, it is determined whether the target mover can travel from the start point to the destination node object by checking whether the destination node object exists among the map node objects in the present priority queue.

In step S104 of some embodiments, after the target mover travels along the present optimized path to a next map node object, next three-dimensional map data are acquired based on a time when the target mover arrives at the next map node object.

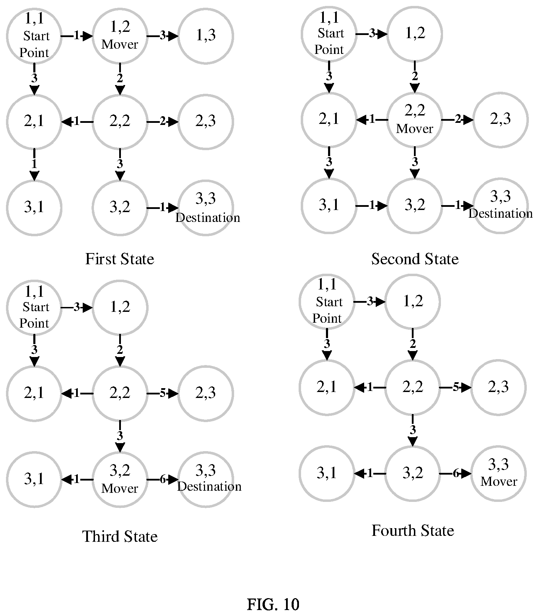

Referring to FIG. 10, in an embodiment, a target mover starts from a start point (1, 1). Path segment loss data between the start point and a node (1, 2) is calculated to be 1, and path segment loss data between the start point and a node (2, 1) is calculated. The node (1, 2) and the node (2, 1) are sorted into a priority queue in ascending order according to the path segment loss data, and the target mover travels to the node (1, 2) based on the nodes in the priority queue, as shown in a first state in FIG. 10. Further, after the target mover arrives at the node (1, 2), first three-dimensional map data are acquired based on a time when the target mover arrives at the node (1, 2), and the target mover travels to (2, 2) based on the first three-dimensional map data, as shown in a second state in FIG. 10. Further, second three-dimensional map data are acquired based on a time state when the target mover arrives at the node (1, 2), and the target mover travels to the node (2, 1) based on the second three-dimensional map data. Further, the target mover travels to a node (3, 1) and a node (3, 2) sequentially, as shown in a third state in FIG. 10. Further, third three-dimensional map data when the target mover travels to the node (3, 2) are acquired. In this case, the target mover can travel to a destination node object, and the target mover directly travels to the destination node object (3, 3).

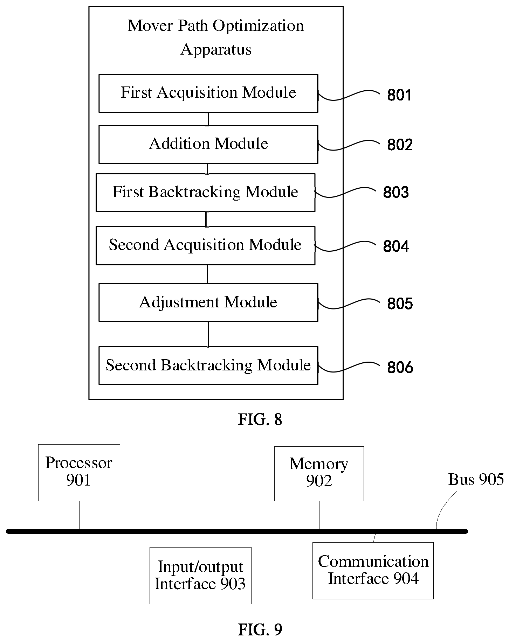

Referring to FIG. 8, in an embodiment of the present disclosure, a mover path optimization apparatus is further provided, which can implement the above mover path optimization method. The apparatus includes:
The first acquisition module 801 is configured to acquire three-dimensional map data of a target mover at a present time point to obtain present three-dimensional map data. The present three-dimensional map data are determined based on map data at the present time point and motion data of movers traveling on a map, and include map node objects, and the map node objects include a start node object, a destination node object, and a plurality of candidate node objects of the target mover.

The addition module 802 is configured to add the candidate node objects to a predetermined priority queue based on the present three-dimensional map data, the start node object, and the destination node object to obtain a present priority queue.

The first backtracking module 803 is configured to perform path backtracking on the present priority queue to obtain a present optimized path.

The second acquisition module 804 is configured to acquire three-dimensional map data of the target mover traveling along the present optimized path to a next map node object to obtain next three-dimensional map data. The next three-dimensional map data are determined based on map data at a next time point and motion data of movers traveling on the map.

The adjustment module 805 is configured to perform node object adjustment on the present priority queue based on the next three-dimensional map data to obtain an updated priority queue.

The second backtracking module 806 is configured to perform path backtracking on the updated priority queue to obtain an updated optimized path.

In an embodiment, the present three-dimensional map data includes motion data of the target mover and motion data of non-target movers. The addition module includes:
The screening module is configured to screen the map node objects based on the candidate node objects adjacent to the start node object to obtain selected node objects.

The first construction module is configured to determine path segment loss data between the start node object and the selected node objects based on the start node object, the selected node objects, the motion data of the target mover, and the motion data of the non-target movers.

The addition sub-module is configured to add the selected node objects to a predetermined priority queue based on the path segment loss data and the destination node object to obtain a present priority queue.

In an embodiment, the first construction module includes:
The first acquisition sub-module is configured to acquire a travel path segment between the selected node objects and the start node object to obtain a selected path segment.

The screening sub-module is configured to screen the motion data of the non-target movers based on the non-target movers traveling on the selected path segment to obtain selected motion data of the non-target movers.

The second acquisition sub-module is configured to acquire a length of the travel path segment of the selected path segment to obtain a selected length.

The third acquisition sub-module is configured to acquire a path segment curvature of the selected path segment to obtain a selected curvature.

The fourth acquisition sub-module is configured to acquire a station planning distance, a maximum planning speed, and a mover planning speed between the selected node objects and the start node object.

The construction sub-module is configured to determine the path segment loss data based on predetermined loss weight data, the selected length, the selected motion data of the non-target movers, the motion data of the target mover, the selected curvature, the station planning distance, the maximum planning speed, and the mover planning speed.

In an embodiment, the loss weight data includes a collision time loss weight, a collision distance loss weight, a longitudinal jerk loss weight, an acceleration loss weight, a curvature weight, a position difference loss weight, and a speed loss weight. The selected motion data of the non-target movers includes selected motion speeds of the non-target movers. The motion data of the target mover includes a motion speed of the target mover, a longitudinal jerk, and an acceleration. The construction sub-module includes:
The first construction unit is configured to determine a collision distance based on the selected length, the motion speeds of the non-target movers, and the motion speed of the target mover.
The second construction unit is configured to determine a collision time based on the collision distance, the motion speeds of the non-target movers, and the motion speed of the target mover.
The third construction unit is configured to determine safety loss data based on the collision time, the collision distance, the collision time loss weight, and the collision distance loss weight.
The fourth construction unit is configured to determine stability loss data based on the longitudinal jerk, the longitudinal jerk loss weight, the acceleration, the acceleration loss weight, the motion speed of the target mover, the selected curvature, and the curvature weight.
The fifth construction unit is configured to determine efficiency loss data based on the position difference loss weight, the station planning distance, the maximum planning speed, and the mover planning speed.
The sixth construction unit is configured to determine the path segment loss data based on the safety loss data, the stability loss data, and the efficiency loss data.

In an embodiment, the addition sub-module includes:
The sorting unit is configured to sort the selected node objects in ascending order based on the path segment loss data of the selected node objects to obtain an ascending sequence of node objects.

The addition unit is configured to add the selected node objects to the priority queue based on the ascending sequence of node objects and the destination node object to obtain the present priority queue.

In an embodiment, the apparatus further includes:
The search module is configured to search for the map node objects in the present priority queue to obtain a queue search result. the queue search result indicates whether the priority queue contains any map node object.

The output module is configured to output path search failure information on a condition that the queue search result indicates that the priority queue does not contain any map node object.

In an embodiment, the apparatus further includes:
The third acquisition module is configured to acquire line position information and obstacle marking information of each conveyor line at different time points. The obstacle marking information represents obstacles on the conveyor line that affect travel of the target mover.
The second construction module is configured to construct a map based on the line position information and the obstacle marking information to obtain the three-dimensional map data at different time points.

For a specific implementation of the mover path optimization apparatus, reference is made to the above embodiments of the mover path optimization method, and details are not repeated herein.

In an embodiment of the present disclosure, an electronic device is further provided, including a memory and a processor. The memory stores a computer program, and the processor executes the computer program to perform the above mover path optimization method. The electronic device can be any intelligent terminal including a tablet computer, a vehicle-mounted computer, etc.

Referring to FIG. 9, FIG. 9 is a schematic diagram illustrating a hardware structure of an electronic device according to another embodiment. The electronic device includes:
The processor 901 may be implemented by a general central processing unit (CPU), a microprocessor, an application specific integrated circuit (ASIC), or one or more integrated circuits, and is configured to execute related programs to implement the technical solutions provided by the embodiments of the present disclosure.

The memory 902 may be implemented by a read-only memory (ROM), a static storage device, a dynamic storage device, or a random access memory (RAM). The memory 902 may store an operating system and other application programs. When the technical solutions provided by the embodiments of the present specification are implemented by software or firmware, related program codes are stored in the memory 902 and invoked by the processor 901 to execute the mover path optimization method according to the embodiments of the present disclosure.

The input/output interface 903 is configured to implement information input and output.

The communication interface 904 is configured to implement communication interaction between the device and other devices, and wired communication (such as a universal serial bus (USB), a network cable) or a wireless communication (such as a mobile network, Wi-Fi, Bluetooth) may be employed.

The bus 905 is configured to transmit information among various components of the device (such as the processor 901, the memory 902, the input/output interface 903 and the communication interface 904).

The processor 901, the memory 902, the input/output interface 903 and the communication interface 904 are communicatively connected to each other inside the device via the bus 905.

In an embodiment of the present disclosure, a computer-readable storage medium storing a computer program is further provided. When the computer program is executed by a processor, the above mover path optimization method is implemented.

As a non-transitory computer-readable storage medium, the memory can be used to store non-transitory software programs and non-transitory computer-executable programs. In addition, the memory may include a high-speed random access memory, and may also include a non-transitory memory, such as at least one magnetic disk storage device, a flash memory device, or other non-transitory solid-state storage devices. In some implementations, the memory optionally includes a memory remotely arranged relative to the processor, and these remote memories may be connected to the processor via a network. Examples of the network include, but are not limited to, the Internet, an enterprise intranet, a local area network, a mobile communication network, and a combination thereof.

According to the mover path optimization method and apparatus, the electronic device, and the storage medium provided by the embodiments of the present disclosure, three-dimensional map data of a target mover at a present time point are acquired. The present three-dimensional map data includes map node objects, and the map node objects include a start node object, a destination node object, and a plurality of candidate node objects of the target mover. Then the candidate node objects are added to a predetermined priority queue based on the present three-dimensional map data, the start node object, and the destination node object to obtain a present priority queue. Then path backtracking is performed based on the present priority queue to obtain a present optimized path, real-time path conditions can be assessed using present map data of the target mover, selection is performed on the candidate node objects between the start node object and the destination node object, and the optimized path is obtained by using the priority queue, which improves the flexibility and efficiency of the target mover during operation of the conveyor line. Next three-dimensional map data of the target mover traveling along the optimized path to a next map node object are acquired. Node object adjustment is performed on the present priority queue based on the next three-dimensional map data to obtain an updated priority queue. Then path backtracking is performed based on the updated priority queue to obtain an updated optimized path. The method can make judgments based on the real-time path conditions at different time points and motion data of a plurality of movers in the map, select a path more advantageous for the transportation process of the target mover, and adjust the path in real time, thereby reducing the loss of the target mover on the conveyor line and improving the efficiency and flexibility of the transportation of the target mover on the conveyor line.

The embodiments described in the present disclosure are intended to describe the technical solutions of the embodiments of the present disclosure more clearly, and do not constitute a limitation on the technical solutions provided by the embodiments of the present disclosure. It is obvious to those skilled in the art that with the evolution of technology and the emergence of new application scenarios, the technical solutions provided by the embodiments of the present disclosure are also applicable to similar technical problems.

Those skilled in the art can understand that the technical solutions shown in the figures do not constitute a limitation on the embodiments of the present disclosure, and may include more or fewer steps than those shown in the figures, or combine some steps, or different steps.

The apparatus embodiments described above are merely illustrative, where the units described as separate components may or may not be physically separated, and the components shown as units may or may not be physical units, i.e., may be located in one place, or may be distributed on a plurality of network units. Some or all of the modules may be selected according to actual needs to achieve the objectives of the solutions of the embodiments.

Those of ordinary skill in the art can understand that all or some of the steps in the methods disclosed above, and functional modules/units in the apparatus and device can be implemented as software, firmware, hardware, and appropriate combinations thereof.

The terms "first", "second", "third", "fourth", etc. (if any) in the specification, claims and the above accompanying drawings of the present disclosure are used to distinguish similar objects and not necessarily to describe a specific order or sequence. It should be understood that the data used in this way may be interchanged where appropriate, such that the embodiments of the present disclosure described herein can be implemented in sequences other than those illustrated or described herein. In addition, the terms "include" and "have" as well as any variations thereof are intended to cover non-exclusive inclusion, for example, a process, method, system, product or device that includes a series of steps or units is not necessarily limited to those steps or units that are clearly listed, but may include other steps or units not expressly listed or inherent to such process, method, product or device.

It should be understood that in the present disclosure, "at least one (item)" means one or more, and "a plurality" means two or more. "And/or" is used to describe an association relationship of associated objects, indicating that three relationships may exist, for example, "A and/or B" may indicate: only A exists, only B exists, and both A and B exist, where A and B may be singular or plural. The character "/" generally indicates that the associated objects are in an "or" relationship. "At least one of the following items (pieces)" or similar expressions means any combination of these items, including any combination of a single item (piece) or a plurality of items (pieces). For example, at least one of a, b, or c may indicate: a, b, c, "a and b", "a and c", "b and c", or "a, b and c", where a, b, c may be single or multiple.

In the several embodiments provided by the present disclosure, it should be understood that the disclosed apparatus and method may be implemented in other manners. For example, the apparatus embodiments described above are merely illustrative. For example, the division of the units is only a logical function division, and there may be another division manner in actual implementation. For example, a plurality of units or components may be combined or integrated into another system, or some features may be ignored or not executed. In addition, the displayed or discussed mutual coupling or direct coupling or communication connection may be through some interfaces, indirect coupling or communication connection of the apparatus or units, and may be electrical, mechanical or in other forms.

The units described as separate components may or may not be physically separated, and the components shown as units may or may not be physical units, i.e., may be located in one place, or may be distributed on a plurality of network units. Some or all of the units may be selected according to actual needs to achieve the objectives of the solutions of the embodiments.

In addition, functional units in the various embodiments of the present disclosure may be integrated into one processing unit, or each unit may exist alone physically, or two or more units are integrated into one unit. The integrated unit may be implemented in a form of hardware, or may be implemented in a form of a software functional unit.

If the integrated unit is implemented in the form of a software functional unit and sold or used as an independent product, it may be stored in a computer-readable storage medium. Based on such understanding, the technical solutions of the present disclosure essentially, or the part contributing to the conventional technology, or all or part of the technical solutions may be embodied in the form of a software product. The computer software product is stored in a storage medium and includes a plurality of instructions for causing a computer device (which may be a personal computer, a server, or a network device) to execute all or part of the steps of the method in the various embodiments of the present disclosure. The foregoing storage medium includes: a U disk, a removable hard disk, a read-only memory (ROM), a random access memory (RAM), a magnetic disk, an optical disk, or other media that can store program codes.

The above embodiments are only used to describe the technical solutions of the present disclosure, but not to limit the present disclosure. Although the present disclosure is described in detail with reference to the foregoing embodiments, those of ordinary skill in the art should understand that: they may still modify the technical solutions described in the foregoing embodiments, or equivalently replace some of the technical features thereof. These modifications or replacements do not make the essence of the corresponding technical solutions depart from the spirit and scope of the technical solutions of the embodiments of the present disclosure.

The technical features of the above embodiments can be combined arbitrarily. To make the description concise, all possible combinations of the technical features in the above embodiments are not described. However, as long as there is no contradiction in the combination of these technical features, they should be considered as falling within the scope of the description.

The above embodiments only express several implementations of the present disclosure. The description thereof is specific and detailed, but cannot be construed as a limitation on the patent scope of the present disclosure. It should be noted that those of ordinary skill in the art can further make several variations and improvements without departing from the concept of the present disclosure, and these all fall within the protection scope of the present disclosure. Therefore, the patent protection scope of the present disclosure shall be subject to the appended claims.

## Claims

1. A mover path optimization method, comprising:
acquiring three-dimensional map data of a target mover at a present time point to obtain present three-dimensional map data, wherein the present three-dimensional map data are determined based on map data at the present time point and motion data of movers traveling on a map, and comprise map node objects, and the map node objects comprise a start node object, a destination node object, and a plurality of candidate node objects of the target mover;
adding the candidate node objects to a predetermined priority queue based on the present three-dimensional map data, the start node object, and the destination node object to obtain a present priority queue;
performing path backtracking on the present priority queue to obtain a present optimized path;
acquiring three-dimensional map data of the target mover traveling along the present optimized path to a next map node object to obtain next three-dimensional map data, wherein the next three-dimensional map data are determined based on map data at a next time point and motion data of movers traveling on the map;
performing node object adjustment on the present priority queue based on the next three-dimensional map data to obtain an updated priority queue; and
performing path backtracking on the updated priority queue to obtain an updated optimized path.

2. The method according to claim 1, wherein the present three-dimensional map data comprises motion data of the target mover and motion data of non-target movers; and adding the candidate node objects to the predetermined priority queue based on the present three-dimensional map data, the start node object, and the destination node object to obtain the present priority queue comprises:
screening the map node objects based on the candidate node objects adjacent to the start node object to obtain selected node objects;
determining path segment loss data between the start node object and the selected node objects based on the start node object, the selected node objects, the motion data of the target mover, and the motion data of the non-target movers; and
adding the selected node objects to the predetermined priority queue based on the path segment loss data and the destination node object to obtain the present priority queue.

3. The method according to claim 2, wherein determining the path segment loss data between the start node object and the selected node objects based on the start node object, the selected node objects, the motion data of the target mover, and the motion data of the non-target movers comprises:
acquiring a travel path segment between the selected node objects and the start node object to obtain a selected path segment;
screening the motion data of the non-target movers based on the non-target movers traveling on the selected path segment to obtain selected motion data of the non-target movers;
acquiring a length of the travel path segment of the selected path segment to obtain a selected length;
acquiring a path segment curvature of the selected path segment to obtain a selected curvature;
acquiring a station planning distance, a maximum planning speed, and a mover planning speed between the selected node objects and the start node object; and
determining the path segment loss data based on predetermined loss weight data, the selected length, the selected motion data of the non-target movers, the motion data of the target mover, the selected curvature, the station planning distance, the maximum planning speed, and the mover planning speed.

4. The method according to claim 3, wherein the loss weight data comprises a collision time loss weight, a collision distance loss weight, a longitudinal jerk loss weight, an acceleration loss weight, a curvature weight, a position difference loss weight, and a speed loss weight; the selected motion data of the non-target movers comprises selected motion speeds of the non-target movers; the motion data of the target mover comprises a motion speed of the target mover, a longitudinal jerk, and an acceleration; and determining the path segment loss data based on predetermined loss weight data, the selected length, the selected motion data of the non-target movers, the motion data of the target mover, the selected curvature, the station planning distance, the maximum planning speed, and the mover planning speed comprises:
determining a collision distance based on the selected length, the motion speeds of the non-target movers, and the motion speed of the target mover;
determining a collision time based on the collision distance, the motion speeds of the non-target movers, and the motion speed of the target mover;
determining safety loss data based on the collision time, the collision distance, the collision time loss weight, and the collision distance loss weight;
determining stability loss data based on the longitudinal jerk, the longitudinal jerk loss weight, the acceleration, the acceleration loss weight, the motion speed of the target mover, the selected curvature, and the curvature weight;
determining efficiency loss data based on the position difference loss weight, the station planning distance, the maximum planning speed, and the mover planning speed; and
determining the path segment loss data based on the safety loss data, the stability loss data, and the efficiency loss data.

5. The method according to claim 2, wherein adding the selected node objects to the predetermined priority queue based on the path segment loss data and the destination node object to obtain the present priority queue comprises:
sorting the selected node objects in ascending order based on the path segment loss data of the selected node objects to obtain an ascending sequence of node objects; and
adding the selected node objects to the priority queue based on the ascending sequence of node objects and the destination node object to obtain the present priority queue.

6. The method according to claim 1, wherein before performing path backtracking on the present priority queue to obtain the present optimized path, the method further comprises:
searching for the map node objects in the present priority queue to obtain a queue search result, wherein the queue search result indicates whether the priority queue contains any map node object; and
outputting path search failure information on a condition that the queue search result indicates that the priority queue does not contain any map node object.

7. The method according to claim 1, wherein before the acquiring three-dimensional map data of the target mover at the present time point to obtain the present three-dimensional map data, the method further comprises:
acquiring line position information and obstacle marking information of each conveyor line at different time points, wherein the obstacle marking information represents obstacles on the conveyor line that affect travel of the target mover; and
constructing a map based on the line position information and the obstacle marking information to obtain the three-dimensional map data at different time points.

8. A mover path optimization apparatus, comprising:
a first acquisition module configured to acquire three-dimensional map data of a target mover at a present time point to obtain present three-dimensional map data, wherein the present three-dimensional map data are determined based on map data at the present time point and motion data of movers traveling on a map, and comprise map node objects, and the map node objects comprise a start node object, a destination node object, and a plurality of candidate node objects of the target mover;
an addition module configured to add the candidate node objects to a predetermined priority queue based on the present three-dimensional map data, the start node object, and the destination node object to obtain a present priority queue;
a first backtracking module configured to perform path backtracking on the present priority queue to obtain a present optimized path;
a second acquisition module configured to acquire three-dimensional map data of the target mover traveling along the present optimized path to a next map node object to obtain next three-dimensional map data, wherein the next three-dimensional map data are determined based on map data at a next time point and motion data of movers traveling on the map;
an adjustment module configured to perform node object adjustment on the present priority queue based on the next three-dimensional map data to obtain an updated priority queue; and
a second backtracking module configured to perform path backtracking on the updated priority queue to obtain an updated optimized path.

9. The apparatus according to claim 8, wherein the present three-dimensional map data comprises motion data of the target mover and motion data of non-target movers, and the addition module comprises:
a screening module configured to screen the map node objects based on the candidate node objects adjacent to the start node object to obtain selected node objects;
a first construction module configured to determine path segment loss data between the start node object and the selected node objects based on the start node object, the selected node objects, the motion data of the target mover, and the motion data of the non-target movers; and
an addition sub-module configured to add the selected node objects to a predetermined priority queue based on the path segment loss data and the destination node object to obtain a present priority queue.

10. The apparatus according to claim 9, wherein the first construction module comprises:
a first acquisition sub-module configured to acquire a travel path segment between the selected node objects and the start node object to obtain a selected path segment;
a screening sub-module configured to screen the motion data of the non-target movers based on the non-target movers traveling on the selected path segment to obtain selected motion data of the non-target movers;
a second acquisition sub-module configured to acquire a length of the travel path segment of the selected path segment to obtain a selected length;
a third acquisition sub-module configured to acquire a path segment curvature of the selected path segment to obtain a selected curvature;
a fourth acquisition sub-module configured to acquire a station planning distance, a maximum planning speed, and a mover planning speed between the selected node objects and the start node object; and
a construction sub-module configured to determine the path segment loss data based on predetermined loss weight data, the selected length, the selected motion data of the non-target movers, the motion data of the target mover, the selected curvature, the station planning distance, the maximum planning speed, and the mover planning speed.

11. The apparatus according to claim 10, wherein the loss weight data comprises a collision time loss weight, a collision distance loss weight, a longitudinal jerk loss weight, an acceleration loss weight, a curvature weight, a position difference loss weight, and a speed loss weight; the selected motion data of the non-target movers comprises selected motion speeds of the non-target movers; the motion data of the target mover comprises a motion speed of the target mover, a longitudinal jerk, and an acceleration; and the construction sub-module comprises:
a first construction unit configured to determine a collision distance based on the selected length, the motion speeds of the non-target movers, and the motion speed of the target mover;
a second construction unit configured to determine a collision time based on the collision distance, the motion speeds of the non-target movers, and the motion speed of the target mover;
a third construction unit configured to determine safety loss data based on the collision time, the collision distance, the collision time loss weight, and the collision distance loss weight;
a fourth construction unit configured to determine stability loss data based on the longitudinal jerk, the longitudinal jerk loss weight, the acceleration, the acceleration loss weight, the motion speed of the target mover, the selected curvature, and the curvature weight;
a fifth construction unit configured to determine efficiency loss data based on the position difference loss weight, the station planning distance, the maximum planning speed, and the mover planning speed; and
a sixth construction unit configured to determine the path segment loss data based on the safety loss data, the stability loss data, and the efficiency loss data.

12. The apparatus according to claim 9, wherein the addition sub-module comprises:
a sorting unit configured to sort the selected node objects in ascending order based on the path segment loss data of the selected node objects to obtain an ascending sequence of node objects; and
an addition unit configured to add the selected node objects to the priority queue based on the ascending sequence of node objects and the destination node object to obtain the present priority queue.

13. The apparatus according to claim 8, further comprising:
a search module configured to search for the map node objects in the present priority queue to obtain a queue search result, wherein the queue search result indicates whether the priority queue contains any map node object; and
an output module configured to output path search failure information on a condition that the queue search result indicates that the priority queue does not contain any map node object.

14. An electronic device, comprising a memory and a processor, the memory storing a computer program, wherein the processor, when executing the computer program, implements the mover path optimization method according to any one of claims 1 to 7.

15. A computer-readable storage medium storing a computer program, wherein when the computer program is executed by a processor, the mover path optimization method according to any one of claims 1 to 7 is implemented.
